# EUROPEAN PATENT SPECIFICATION

(11) **EP 4 015 136 B1**
(45) Date of publication and mention of the grant of the patent: **10.07.2024**
(21) Application number: 21214177.4
(22) Date of filing: 13.12.2021
(51) Int. Cl.: B23K 26/362, B44C 1/22, B23K 26/18, B23K 26/00, B23K 26/402, B08B 7/00, B23K 26/352

(54) **COATING TO ENABLE LASER REMOVAL OF AN OUTER LIVERY ON A COMPOSITE SUBSTRATE**
BESCHICHTUNG ZUR ERMÖGLICHUNG DER LASERENTFERNUNG EINER ÄUSSEREN BESCHICHTUNG AUF EINEM VERBUNDSUBSTRAT
REVÊTEMENT PERMETTANT L'ENLÈVEMENT AU LASER D'UNE GARNITURE EXTÉRIEURE SUR UN SUPPORT COMPOSITE

(30) Priority: 18.12.2020 US 202063127923 P; 17.11.2021 US 202117455344
(43) Date of publication of application: 22.06.2022
(73) Proprietor: The Boeing Company, Arlington, VA 22202 (US)
(72) Inventor: BLOHOWIAK, Kay Youngdahl, Chicago, 60606-1596 (US); BREI, Mark R., Chicago, 60606-1596 (US); SEEBERGH, Jill Elisabeth, Chicago, 60606-1596 (US); RILEY, Terrell Diane, Chicago, 60606-1596 (US); GORDON, Kevin D., Chicago, 60606-1596 (US); HAINES, Dakota Summer, Chicago, 60606-1596 (US); LARSON-SMITH, Kjersta L., Chicago, 60606-1596 (US); GREGERSEN, Kimberly-Alice D., Chicago, 60606-1596 (US); FRONING, Marc James, Chicago, 60606-1596 (US)
(74) Representative: Smart, Jessica Ann

(56) References cited:
- WO-A1-2013/059779
- CZ-A3- 20 013 394
- US-A- 5 643 476
- US-A1- 2018 290 183

## Description

### FIELD

The disclosure relates to methods and coatings for protecting the surface of a non-metallic composite part and/or enabling removal of said coatings from a composite substrate.

### BACKGROUND

Composites are utilized in the construction of many articles including aircraft fuselages. These articles are often adorned with an outer livery, which is often decorative, to brand the article or aircraft. Either through wear over time or branding changes, the outer livery on the composite parts may need to be removed so that a new outer livery can be added. Typically, chemical paint strippers (such as benzyl alcohol based) or mechanical abrasion (such as sanding) are used to remove the outer livery. These methods can have undesirable effects on the underlying composite part. Sanding off the paint layers of an outer livery is time consuming. Using a chemical paint stripper requires the application of an intermediate coat that can swell when exposed to benzyl alcohol-based paint stripper resulting in added paint flow, weight and/or thickness. Further, application of the chemical paint stripper requires multiple applications and special containment of the chemicals during the stripping process. There is a need for structures and processes that overcome these limitations.

US2018290183 describes molds, comprising non-metal base portions and protective optical layers that cover and shield these base portions from laser ablation. For example, a protective optical layer may reflect a laser beam used for ablating the mold. Methods of forming these protective optical layers on non-metal base portions are also provided. In some embodiments, this protective optical layer is the outermost layer exposed to the environment. Alternatively, the protective optical layer may be covered by a release layer. The release layer may be retained or removed during laser ablation. In some embodiments, light emitted by a mold during laser ablation is analyzed to determine performance of its protective optical layer. This feedback may be used to control the laser ablation such as to control orientation of the laser beam relative to the mold.

WO2013059779 describes a removal system configured for removing a coating from a substrate of a component. A first and second energy source are each configured to direct electromagnetic radiation onto the component; the electromagnetic radiation produces a respective first and second property. A sensor detects the first and second properties produced by the first and second stream of electromagnetic radiation. A controller is configured to receive the detected first and second property from the sensor and the associated first and second power levels from the respective first and second energy sources. The controller transmits an updated power level to at least one of the first and second energy sources in response to the first and second property received from the sensor and the associated power level received from the first and second energy sources.

US5643476 describes a laser system for the removal of graffiti from a retro-reflective highway sign or other surface. The system includes a mobile crane adapted to support a laser scanner and an ablating laser under the control of a computer. An optical sensor and target indicator cooperate to function as a target acquisition device for identifying portions of a highway sign covered with graffiti. Responsive to the target acquisition device, the computer controls the laser scanner and laser to automatically ablate the graffiti covered portions of the highway sign to remove the graffiti. If needed, any remaining graffiti is manually brushed away and the highway sign is polished to restore the retro-reflective properties.

CZ20013394 describes a vertical traffic sign for roads and process for producing bottom board thereof.

### SUMMARY

According to an aspect, there is provided a method as defined in claim 1. According to another aspect, there is provided a coated non-metallic composite part as defined in claim 8.

In accordance with one or more examples, provided are structures and methods that allow outer coatings, such as a decorative livery, to be removed from a composite article in a manner that reduces undesirable effects on the composite article compared to methods using chemical paint strippers or mechanical abrasion.

Disclosed herein are methods for protecting a surface of a non-metallic composite part during laser ablative removal of an outer coating by applying a protective coating layer to a surface of the non-metallic composite part to form a coated non-metallic composite part and curing the coated non-metallic composite part. The protective coating layer comprises: (a) a multilayer having at least a co-cured layer applied to a surface of the non-metallic composite part and at least a laser-sensitive layer applied to a surface of the co-cured layer, wherein the laser-sensitive layer is selected from a reflective layer, an optical sensor layer or a layer having both reflective and optical sensor properties; or (b) a co-curable coating which comprises a laser-sensitive material incorporated therein to form a laser-sensitive co-cured layer applied to a surface of the non-metallic composite part, wherein the laser-sensitive material is selected from a reflective material, optical sensor material or a combination thereof.

Also disclosed are methods of removing an outer coating from a non-metallic composite part by applying a protective coating layer to a surface of a non-metallic composite part, applying the outer coating to the protective coating layer, and exposing the coated non-metallic composite part to a laser to remove the outer coating. The protective coating layer comprises: (a) a multilayer having at least a co-cured layer applied to the surface of the non-metallic composite part and at least a laser-sensitive layer applied to a surface of the co-cured layer, wherein the laser-sensitive layer is selected from a reflective layer, an optical sensor layer or a layer having both reflective and optical sensor properties; or (b) a co-curable coating which comprises a laser-sensitive material incorporated therein to form a laser-sensitive co-cured layer applied to a surface of the non-metallic composite part, wherein the laser-sensitive material is selected from a reflective material, an optical sensor material or a combination thereof.

In accordance with one or more examples, the coated non-metallic composite parts comprise a protective coating layer applied to a non-metallic composite part; and an outer coating applied to the protective coating layer. The protective coating layer comprises: (a) a multilayer having at least a co-cured layer applied to a surface of the non-metallic composite part and at least a laser-sensitive layer applied to a surface of the co-cured layer, wherein the laser-sensitive layer is selected from a reflective layer, an optical sensor layer or a layer having both reflective and optical sensor properties; or (b) a co-curable coating which comprises a laser-sensitive material incorporated therein to form a laser-sensitive co-cured layer applied to a surface of the non-metallic composite part, wherein the laser-sensitive material is selected from a reflective material, optical sensor material or a combination thereof. In one or more examples, the protective coating layer of the non-metallic composite part comprises a multilayer and the laser-sensitive layer applied to a surface of the co-cured layer is a reflective layer. In other examples, the protective coating layer comprises a multilayer and the laser-sensitive layer applied to a surface of the co-cured layer is an optical sensor layer. In one or more examples, the protective coating layer of the non-metallic composite part comprises a co-curable coating and the laser-sensitive material incorporated therein is a reflective material. In other examples, the protective coating layer comprises a co-curable coating and the laser-sensitive material incorporated therein is an optical sensor material.

The features, functions, and advantages that have been discussed can be achieved independently in various examples or may be combined in yet other examples further details of which can be seen with reference to the following description and drawings.

### DRAWINGS

The various advantages of the examples of the present disclosure will become apparent to on skilled in the art by reading the following specification and appended claims, and by referencing the following drawings in which:
**Figs. 1A-1E** are illustrations of examples of cross-sections coated non-metallic composite parts.
**Fig. 2** is an illustration of an example of a method of applying an outer coating to a coated non-metallic composite part, ablating the outer coating, and subsequently applying a new outer coating.
**Fig. 3** is an illustration of an example of application of an outer coating as the outer layer of a coated non-metallic composite part and then ablating the outer coating leaving the surface ready for subsequent coating applications.
**Fig. 4** is an illustration of an example of laser ablation of an outer coating from a coated non-metallic composite part using a feedback loop to monitor the ablation.
**Fig. 5** is an illustration of an example of laser ablation of a portion of at least an outer coating from a coated non-metallic composite part using a feedback loop to monitor the ablation and subsequently applying a new outer coating.
**Fig. 6** is a schematic representation of an example of protecting a surface of a non-metallic composite part during laser ablative removal of an outer coating.
**Fig. 7** is a schematic representation of an example of removing an outer coating from a coated non-metallic composite part.

Accordingly, it is to be understood that the examples herein described are merely illustrative of the application of the principles disclosed. Reference herein to details of the illustrated examples is not intended to limit the scope of the claims, which themselves recite those features regarded as essential to the disclosure.

### DESCRIPTION

Disclosed are methods and coatings for protecting the surface of a non-metallic composite part during laser ablative removal of an outer coating, such as a decorative or non-decorative livery, comprising applying a protective coating layer to a surface of a non-metallic composite part. The protective layer can have a multilayer construction wherein at least a laser-sensitive layer is applied to a co-cured layer that is applied to a surface of the non-metallic composite part prior to curing, wherein the laser-sensitive layer is selected from a reflective layer, an optical sensor layer or a layer having both reflective and optical sensor properties. Alternatively, the laser-sensitive material is combined with the co-cured layer by incorporating the laser-sensitive material into the co-curable coating composition or formulation prior to applying it to the non-metallic composite part and composite curing. The laser-sensitive material is selected from a reflective material, an optical sensor material or a combination thereof. These constructions protect the non-metallic composite part from damage during subsequent laser ablation to remove an outer coating, such as a decorative or nondecorative coating, that is positioned as the outermost layer of the coated non-metallic composite part.

Coatings described herein can be integrated into a composite fabrication process to protect a non-metallic composite part from laser ablation during removal of an outer coating such as a decorative livery.
Disclosed are coated non-metallic composite parts comprising: a non-metallic composite part; a protective coating layer applied to the non-metallic composite part; and an outer coating applied to the protective coating layer. The protective coating layer comprises:
(a) a multilayer having at least a co-cured layer applied to a surface of the non-metallic composite part and at least a laser-sensitive layer applied to a surface of the co-cured layer, wherein the laser-sensitive layer is selected from a reflective layer, an optical sensor layer or a layer having both reflective and optical sensor properties;
(b) a co-curable coating which comprises a laser-sensitive material incorporated therein to form a laser-sensitive co-cured layer applied to a surface of the non-metallic composite part, wherein the laser-sensitive material is selected from a reflective material, an optical sensor material or a combination thereof.

The coated non-metallic composite parts can comprise an outer coating, such as a decorative livery, applied to either (i) the laser-sensitive layer, wherein the laser-sensitive layer is one of a reflective layer, an optical sensor layer or a layer having both reflective and optical sensor properties; or (ii) the laser-sensitive co-cured layer, wherein the laser-sensitive material is selected from a reflective material, an optical sensor material or a combination thereof to form a laser-sensitive co-cured reflective layer or a laser-sensitive co-cured optical sensor layer. The outer coating can be non-decorative.

The coated non-metallic composite part **100** can be formed by applying the protective coating layer **300** to the non-metallic composite part **200.** Applying the protective coating layer **300** can comprise (i) applying a co-cured layer **312** to a surface of a non-metallic composite part **200,** and (ii) applying a laser-sensitive layer **311,** wherein the laser-sensitive layer **311** is one of a reflective layer, an optical sensor layer or a layer having both reflective and optical sensor properties to a surface of the co-cured layer **312.** With other coated non-metallic composite parts **100,** the protective coating layer **300** comprises applying a co-curable coating which comprises laser-sensitive material **320a** incorporated therein to form a laser-sensitive co-cured layer **320** applied to a surface of the non-metallic composite part **200,** wherein the laser-sensitive material **320a** is selected from a reflective material, an optical sensor material or a combination thereof.

The non-metallic composite parts **200** comprise a composite material. The term "composite material" refers to a material made of two or more constituent materials, for example carbon or other reinforcing fibers embedded in a polymer resin matrix. Certain fiber-reinforced composites materials comprise carbon-reinforced polymers, glass fiber-reinforced polymers, or mixtures thereof. The fiber-reinforced composites comprise a polymer matrix. Fiber-reinforced composites can comprise bismaleimide, epoxy, benzoxazine polyurethane/polycarbonate, polyester, polyurea, fluorourethane, acrylic, or polysiloxane, polymer matrix. Certain coated non-composite composite parts comprise a non-metallic composite part comprising carbon-reinforced polymers, glass fiber-reinforced polymers, or mixtures thereof and a co-cured layer comprising polyurea, fluorourethane, polyester, acrylic, polycarbonate, polysilazane, sol-gel coating, or epoxy.

The phrase "outer coating" refers to a decorative or non-decorative outer coating including a decorative or non-decorative livery.

The term "decorative livery" refers to a distinctive decoration, graphic or symbol that is associated with a particular company, brand, or product.

The term "co-curable" refers to a composition or formulation that is capable of being cured.

The term "co-curable coating" refers to a polymeric coating or coating composition or formulation that can be co-cured with other polymeric coatings or layers to form all or part of a coated non-metallic part.

The term "co-cured" refers to two or more layers or coatings that are cured at the same time. Curing comprises any method suitable to cure the polymer(s). Curing can involve one or more of thermal energy or humidity. Autoclave or microwave systems are examples of equipment that can be used in curing.

The phrase "co-cured layer" is a polymeric layer that can be and/or has been co-cured with the non-metallic composite layer and/or other polymeric layers (such as the protective coating layer(s)) to form all or part of a coated non-metallic composite part. It is understood that when either the phrase "co-cured layer" or "co-curable layer" is used, it is understood that the other example is also contemplated. Similarly, it is understood that when either the phrase "co-cured coating" or "co-curable coating" is used, the other example is also contemplated.

The term "laser-sensitive" refers to a property or characteristic of materials, coatings, layers, films, etc. that reflect, react, or are activated by laser-emitted light or irradiation.

The term "new" as applied to the outer coating refers to the outer coating applied to the coated non-metallic composite part after an existing outer coating was removed.

As used herein, when one of the terms "film", "coating" and "layer" are used, it is understood that analogous examples with each of the other terms are contemplated. When one of the terms "film", "coating", or "layer" is used, it is understood that the "film", "coating", or "layer" can comprise a single or multi-"film", single or multi- "coating", or single or multi- "layer" construction. For example, each co-cured layer, each laser-sensitive layer, each co-curable coating which comprises a laser-sensitive material, each surfacing film and each outer coating can comprise a single or plurality of layers or coatings.

As used herein, when one of the terms "body", "part", "substrate" and "article" are used, it is understood that analogous examples with each of the other terms are contemplated.

The terminology used herein is for the purpose of describing particular examples only and is not intended to be limiting of examples. As used herein, the singular forms "a," "an," and "the" are intended to include the plural forms as well, unless the context clearly indicates otherwise. It will be further understood that the terms "comprises," "comprising," "includes," and/or "including," when used in this specification, specify the presence of stated features, integers, steps, operations, elements, and/or components, but do not preclude the presence or addition of one or more other features, integers, steps, operations, elements, components, and/or groups thereof.

Likewise, a group of items linked with the conjunction "and" should not be read as requiring that each and every one of those items be present in the grouping, but rather should be read as "and/or" unless expressly stated otherwise. Similarly, a group of items linked with the conjunction "or" should not be read as requiring mutual exclusivity among that group, but rather should also be read as "and/or" unless expressly stated otherwise. Furthermore, although items, elements or components of the disclosure may be described or claimed in the singular, the plural is contemplated to be within the scope thereof unless limitation to the singular is explicitly stated. The presence of broadening words and phrases such as "one or more," "at least," "but not limited to" or other like phrases in some instances shall not be read to mean that the narrower case is intended or required in instances where such broadening phrases may be absent. The term "about" when referring to a numerical value or range is intended to encompass values resulting from experimental error that can occur when taking measurements.

Non-metallic composite parts **200** can comprise a surfacing film **400** or layer that forms an outer layer of the non-metallic composite part prior to addition of the protective coating layer **300.** The surfacing layer can serve to provide an improved surface for bonding of further layers or provide a sealing function. For example, the surfacing layer makes the surface of the non-metallic composite part **200** smoother. In one or more examples, the surfacing film **400** or layer is between the non-metallic composite part and the co-cured layer **312.** The surfacing film **400** or layer can comprise the same polymer composition of the resin of the non-metallic composite part or can comprise a different polymer composition. The polymer composition can comprise one or more polymers selected from epoxy, bismaleimide, benzoxazine, polyurethane/polycarbonate, polyester, polyurea, fluorourethane, acrylic, polysiloxane, and the like. The surfacing films can also comprise fillers such as pigments or conductive mesh.

Coatings can be reflective or designed to be an optical sensor by selecting absorptive/reflective properties of the materials. Reflective materials reflect laser light to inhibit interaction of the laser with the non-metallic composite part. Optical sensor materials can be coupled with a feedback loop to measure surface *in situ* to determine when laser de-painting is complete and thus inhibit interaction of the laser with the coating material.

Co-curable coatings which comprise a laser-sensitive material **320a,** incorporated therein provide a layer positioned between the non-metallic composite part **200** and the outer coating **500.** When the laser-sensitive material **320a** is not contained within the co-cured layer, the co-cured layer **312** is positioned between the non-metallic composite part **200** and the laser-sensitive layer **311,** wherein the laser-sensitive layer **311** is one of a reflective layer, an optical sensor layer or a layer having both reflective and optical sensor properties. The co-cured layer **312** can comprise polyurea, fluorourethane, polyester, acrylic, polycarbonate, polysilazane, sol-gel coating, or epoxy. Sol-gel coatings include, but are not limited to, silicon-based sol-gels such as alkoxysilane, chlorosilane, and Si--Zr-glycidyl sol-gels such as AC^{®}-130, available from Advanced Chemistry and Technology (Garden Grove, CA) which is a combination of 3-glycidyloxypropyltrimethoxysilane (GTMS) and Zr (IV) n-propoxide reacted in the presence of an acid, such as acetic acid. Alkoxysilane includes, but is not limited to, allyltrimethoxysilane, [3-(diethylamino)propyl]trimethoxysilane, isobutyl(trimethoxy)silane, n-propyltriethoxysilane, tetramethyl orthosilicate, tetrapropyl orthosilicate, triethoxy(octyl)silane, triethoxyphenylsilane, triethoxyvinylsilane, trimethoxymethylsilane, trimethoxyphenylsilane, and mixtures thereof. Chlorosilane includes, but is not limited to, butyltrichlorosilane, ethyltrichlorosilane, methyltrichlorosilane, pentyltrichlorosilane, and mixtures thereof.

The co-cured layer **312** can be applied to the non-metallic composite part **200** as a spray, powder, or film, and then cured with or separate from, the curing of the non-metallic composite part **200.** By utilizing separate layers, impact to the co-cured layer **312** is minimized and controlled during laser ablative removal of the outer coating **500.**

When the laser-sensitive material **320a,** selected from a reflective material, an optical sensor material, or a combination thereof is contained in a layer separate from the co-cured layer **312,** the reflective material or optical sensor material is contained in a matrix material suitable to disperse the reflective material, optical sensor material or combination thereof to avoid disruption of the film forming properties and maintain performance such as adhesion, corrosion protection, etc., of the layer. In at least one example, a polymer matrix resin can be utilized. The polymer matrix resin comprises polyurea, fluorourethane, polyester, acrylic, polycarbonate, polysilazane, sol-gel coating, or epoxy. Sol-gel layers include silicon-based sol-gels such as alkoxysilane, chlorosilane, and Si--Zr-glycidyl sol-gels such as AC^{®}-130, available from Advanced Chemistry and Technology (Garden Grove, CA) composition which is a combination of 3-glycidyloxypropyltrimethoxysilane (GTMS) and Zr (IV) n-propoxide reacted in the presence of an acid, such as acetic acid. Alkoxysilane includes allyltrimethoxysilane, [3-(diethylamino)propyl]trimethoxysilane, isobutyl(trimethoxy)silane, n-propyltriethoxysilane, tetramethyl orthosilicate, tetrapropyl orthosilicate, triethoxy(octyl)silane, triethoxyphenylsilane, triethoxyvinylsilane, trimethoxymethylsilane, trimethoxyphenylsilane, and mixtures thereof. Chlorosilane includes, but is not limited to, butyltrichlorosilane, ethyltrichlorosilane, methyltrichlorosilane, pentyltrichlorosilane, and mixtures thereof. As with the co-cured layer **312,** the co-curable coating which comprises a laser-sensitive material **320a** selected from a reflective material, an optical sensor material or a combination thereof incorporated therein can be applied to the non-metallic composite part **200** as a spray, powder or film and then cured with or separate from the curing of the non-metallic composite part **200.**

In certain coated non-metallic composite parts **100,** the co-curable coating which comprises a laser-sensitive material **320a** incorporated therein has surfaces adjacent to the non-metallic composite part **200** and opposite to the non-metallic composite part **200,** and wherein the laser-sensitive material **320a** is concentrated near the surface opposite to the non-metallic composite part **200.** By concentrating the laser-sensitive material **320a** near the surface of the co-cured layer, damage to the laser-sensitive co-cured layer **320** will be minimized when removing the outer coating **500.** This is accomplished by signaling that the outer coating **500** is removed at an earlier time than if the laser-sensitive material **320a** were concentrated deeper into the laser-sensitive co-cured layer **320** formed after curing the co-curable coating which comprises at least one of a laser-sensitive material **320a** incorporated therein. With coated non-metallic composite parts **100,** the protective coating layer **300** can comprise a reflective material. In other methods, the protective coating layer **300** comprises an optical sensor material. In other methods, the protective coating layer **300** comprises a combination of both a reflective material and an optical sensor material, which can be a single material that possesses both reflective and optical sensor properties or at least two different materials, wherein at least one is a reflective material, and at least one other is an optical sensor material. In one or more examples, at least 90% or at least 80% or at least 70% of the laser-sensitive material **320a** is located adjacent to the surface opposite to the non-metallic surface of the non-metallic composite part **200.** The laser-sensitive material **320a** can be located within a predetermined distance from the surface opposite to the non-metallic surface of the non-metallic composite part to maintain adequate thickness and prevent loss of too much of the thickness of the laser-sensitive co-cured layer **320** during the first laser ablation, or de-painting cycle, due to the laser ablating down to the laser-sensitive material **320a.** For example, with a laser-sensitive material that is metallic, the predetermined distance can be determined based on the original thickness of the laser-sensitive co-cured layer **320** and the thickness above the reflective material, optical sensor material or a combination thereof prior to ablation using known methods for measuring paints and/or polymers on metallic surfaces. Alternatively, the laser-sensitive material **320a** can be uniformly dispersed.

Laser-sensitive materials **320a** are at least one of reflective materials or optical sensor materials which can include, but are not limited to, metal or ceramic flakes. Certain metal or ceramic flakes include, but are not limited to, one or more of alumina flakes, stainless steel flakes, nickel flakes, and rare Earth pigments.

In accordance with one or more examples, the laser-sensitive layer **311** of the protective coating layer **300** contains reflective materials and can be referred to as a "reflective layer" or a "reflective co-cured layer" when the reflective material is incorporated within the co-curable coating to form the laser-sensitive co-cured layer **320** applied to the non-metallic composite part **200.** The reflective layer or reflective co-cured layer serves to reflect laser light and inhibit interaction of the laser with the underlying non-metallic composite part **200.** In other examples, the laser-sensitive layer **311** of the protective coating layer **300** contains optical sensor materials and can be referred to as an "optical sensor layer" or an "optical sensor co-cured layer" when the optical sensor material is incorporated within the co-curable coating applied to the non-metallic composite part **200.** Due to the optical sensor material, the optical sensor layer or optical sensor co-cured layer serves to provide a color change, a change in fluorescence, or reflection of light to signify that the outer coating has been removed. The color change, change in fluorescence or reflection can notify a user when the outer layer is removed, and the protective layer has been reached. The color change, change in florescence or reflection can also be monitored via a sensing device coupled to a feedback loop.

The outer coating **500** can be a decorative or non-decorative layer. In at least one example, the outer coating **500** is a decorative coating. The outer coating **500** can comprise a decal or painted layer. Outer coatings can include, but are not limited to, applying multiple layers of coatings to form the decorative coating. With decorative coatings, the coat can be applied by a process using a series of masking operations followed by applying colored paints or coatings where they are needed. Other outer coatings **500** are formed using ink jetting techniques to apply the decorative coat.

Disclosed herein are methods for protecting a surface of a non-metallic composite part **200** during removal of an outer coating **500** by applying a protective coating layer **300** to a surface of the non-metallic composite part **200** to form a coated non-metallic composite part **100** and curing the coated non-metallic composite part **100,** where the protective coating layer **300** comprises: (a) a multilayer **310** having at least a co-cured layer **312** applied to a surface of the non-metallic composite part **200** and at least a applied to a surface of the co-cured layer **312,** wherein the laser-sensitive layer **311** is selected from a reflective layer, an optical sensor layer or a layer having both reflective and optical sensor properties; or (b) a co-curable coating which comprises a laser-sensitive material **320a** incorporated therein to form a laser-sensitive co-cured layer **320** applied to a surface of the non-metallic composite part **200,** wherein the laser-sensitive material **320a** is selected from a reflective material, an optical sensor material or a combination thereof. The method comprises: (1) providing a protective coating layer **300** to a surface of the non-metallic composite part **200** by: (a)(i) applying a co-cured layer **312** to a surface of a non-metallic composite part **200,** and (ii) applying a laser-sensitive layer to a surface of the co-cured layer **312,** wherein the laser-sensitive layer is selected from a reflective layer, an optical sensor layer or a layer having both reflective and optical sensor properties; or (b) applying a co-curable coating which comprises a laser-sensitive material **320a** incorporated therein to form a laser-sensitive co-cured layer **320** applied to a surface of the non-metallic composite part **200,** wherein the laser-sensitive material **320a** is selected from a reflective material, an optical sensor material or a combination thereof; and (2) curing the coated non-metallic composite part **100.**

The co-cured layer **312** or co-curable coating which comprises a laser-sensitive material **320a,** incorporated therein can be deposited onto the non-metallic composite part **200** and cured.

When the reflective material, optical sensor material or combination thereof is in a separate layer from the co-cured layer **312,** the layers can be cured at the same time or in sequence as they are applied.

The coated non-metallic composite part **100** can further comprise an outer coating **500** applied to either (i) the laser-sensitive layer **311,** wherein the laser-sensitive layer **311** is one of a reflective layer, an optical sensor layer or a layer having both reflective and optical sensor properties; or (ii) the co-curable coating which comprises a laser-sensitive material **320a** incorporated therein, wherein the laser-sensitive material is selected from a reflective material, an optical sensor material or a combination thereof. The method can further comprise removing at least a portion of the outer coating **500** from the coated non-metallic composite part **100** using a laser ablative method.

Also, disclosed are methods for removing an outer coating **500** from a coated non-metallic composite part **100** without damaging the non-metallic composite part **200.** The method comprises contacting the outer coating **500** with a laser ablative device; wherein the coated non-metallic composite part **100** comprises a non-metallic composite part **200** and a protective coating layer **300** comprising either (a) a multilayer **310** having at least a co-cured layer **312** applied to a surface of the non-metallic composite part **200** and at least a laser-sensitive layer **311** applied to a surface of the co-cured layer **312,** wherein the laser-sensitive layer is selected from a reflective layer, an optical sensor layer or a layer having both reflective and optical sensor properties; or (b) a co-cured coating which comprises a laser-sensitive material **320a** incorporated therein to form a laser-sensitive co-cured layer **320** applied to a surface of the non-metallic composite part **200,** wherein the laser-sensitive material **320a** is selected from a reflective material, an optical sensor material or a combination thereof. The protective coating layer **300** can comprise either (i) a co-cured layer **312** applied to a surface of a non-metallic composite part **200** and a laser-sensitive layer **311** applied to a surface of the co-cured layer **312,** wherein the laser-sensitive layer is selected from a reflective layer, an optical sensor layer or a layer having both reflective and optical sensor properties; or (ii) a co-cured coating which comprises a laser-sensitive material **320a** incorporated therein to form a laser-sensitive co-cured layer **320** applied to a surface of the non-metallic composite part **200,** wherein the laser-sensitive material **320a** is selected from a reflective material, an optical sensor material or a combination thereof. The outer coating **500** can be on either (i) the laser-sensitive layer **311,** wherein the laser-sensitive layer **311** is one of a reflective layer, an optical sensor layer or a layer having both reflective and optical sensor properties; or (ii) the co-curable coating which comprises a laser-sensitive material **320a,** incorporated therein, wherein the laser-sensitive material is selected from a reflective material, an optical sensor material or combination thereof. In some examples, the outer coating **500** is a decorative coating. In other examples, the outer coating **500** is a non-decorative coating.

The laser ablative device can be any suitable laser for laser ablation. Types of lasers **600** include, but are not limited to, carbon dioxide (CO₂), Helium-neon, Argon, Krypton, Xenon, Nitrogen, carbon monoxide (CO) or excimer lasers. Lasers can operate at different pulse lengths (such as ns, ps, fs ranges) or operate as a continuous laser. Wavelengths of the laser can be selected depending on the reflective material or optical sensor material or the reflective material or optical sensor material can be tuned for a predetermined wavelength. For example, UV-Vis-Infrared absorption or reflection of the sensor can be used to determine an appropriate laser and sensor combination. Lasers can also be selected from near IR (1064 nm), CO₂ (10,600 nm) lasers, green (532 nm), UV (355 nm), and plasma lasers.

Examples of reflective material or optical sensor materials include metal or ceramic flakes. Certain metal or ceramic flakes comprise one or more of alumina flakes, stainless flakes, nickel flakes and rare Earth pigments. The amount of the reflective material or optical sensor material can depend on the size, weight, and geometry of the flakes, and desired effectiveness or performance of the material.

In certain methods, the protective coating layer **300** comprises a reflective material. In other methods, the protective coating layer **300** comprises an optical sensor material. In certain methods, the laser-sensitive layer **311,** wherein the laser-sensitive layer **311** is one of a reflective layer, an optical sensor layer or a layer having both reflective and optical sensor properties undergoes (i) changes in color, (ii) changes in fluorescence or (iii) reflects light upon exposure to a laser **600** or a laser beam.

The (i) color change, (ii) fluorescence or (iii) light reflection in the optical sensor layer can be monitored by a sensor within a feedback loop that notifies a user that the outer coating is removed. In certain examples, the method further comprises applying a laser **600** to a portion of the outer coating to remove a portion, and subsequently applying the laser **600** to an additional portion of the outer coating to remove an additional portion. Additional portions can be contacted with laser **600** until the desired portion of the outer coating is removed.

In one or more examples, in response to the laser beam impacting a surface, ultrasonic waves or stress waves can be formed within the composite structure. Ultrasonic waves can be detected using a detection system and a detection laser beam. In some examples, when the detection laser beam encounters an ultrasonic wave, the detection laser beam can be altered. Such alterations can include, but are not limited to, a change in at least one of the path, intensity, phase, frequency, or other feature of a detection laser beam such as laser intensity, polarization state, change in bandwidth, or laser phase behavior. These alterations can be detected by the detection system. The detection system can be configured to detect a signal from one or more detection points on coated non-metallic composite part **100,** with the signal corresponding to the altered detection laser beam at the given locations. In one illustrative example, the detection system takes the form of an interferometry-based detection system.

When the outer coating **500** is contacted with a laser beam, the exposure ablates the outer coating **500.** As such, this technique can be referred to as laser ablation. Guidelines for evaluation of materials and process for removal of an outer coating or outer coating used in the aerospace industry are described in SAE Standard MA4872A (2012). For purposes of this disclosure, laser ablation is defined as a process of removing the outer coating **500** by irradiating it with a laser beam. Depending on the intensity of laser **600,** the outer coating **500** is heated by the absorbed laser energy and evaporates or sublimates or the outer coating **500** can be even converted into a plasma. The amount of energy required during laser ablation to remove an outer coating depends upon the material. The amount of energy should be sufficient to overcome the ablation threshold for pulsed lasers but can be significantly lower for continuous wave systems that remove material through a thermal oxidative process. The amount of energy needed may vary based on factors including thickness of the outer coating and the materials used in forming the outer coating.

During the exposure to the laser beam, the protective reflective material blocks the laser beam from reaching the non-metallic composite part **200.** In some examples, the co-cured layer **312** or the laser-sensitive co-cured layer **320** remains intact. In other examples, at least a portion of the co-cured layer **312** or the laser-sensitive co-cured layer **320** is removed depending on the thickness and the materials used for the co-cured layer **312** or the laser-sensitive co-cured layer **320,** but without reaching the non-metallic composite part **200.**

The methods can comprise positioning a protective laser-sensitive layer **311** on top of the co-cured layer **312** that is positioned on top of the non-metallic composite part **200** prior to curing, such as by autoclave. Alternatively, the reflective material or optical material can be combined with the co-cured layer by incorporating laser reflective pigments or metal flakes into the co-curable coating formulation. The density and/or surface energy of the of the coating can be selected or adjusted so that the pigment or metal flakes migrate to the surface of the layer. For example, the density of the coating can be selected or adjusted to be higher than the pigment or metal flakes, such that the pigment or metal flakes migrate to the surface. In another example a surface treatment can be used to make the pigment or metal flakes incompatible with the coating matrix to cause stratification wherein the pigment or metal flakes migrate to the surface of the layer.

The protective reflective coating or film will reflect laser light once the laser **600** has removed the outer coating **500** to inhibit interaction of the laser **600** with the underlying non-metallic composite part. In one or more examples, the reflective coating or film can be tuned to a laser wavelength and reflects the wavelength away from the composite part surface. The protective optical sensor coating can be coupled with a camera **700** feedback loop to measure the surface *in-situ* to determine when laser de-painting of the outer coating **500** is complete and thus inhibits interaction of the laser **600** with the underlying coating material. When the laser **600** completes the removal of the outer coating **500,** the underlying optical sensor coating changes color or fluoresces which is picked up by a sensor, such as a camera **700** or other sensor devices. Other sensor devices can include but are not limited to, complimentary metal-oxide semiconductor (CMOS), charge coupled device (CCD), and infrared Indium-gallium-arsenide (InGaAs detectors).

A monitoring operation can comprise determining a point in time when the outer coating **500** is removed from the composite device by monitoring the feedback loop. The feedback loop can be used to control the ablation system, such as directing the laser beam to a new location where the outer coating **500** is still present.

In one or more examples, once the outer coating **500** is removed, any repairs to either (i) the laser-sensitive layer **311;** or (ii) the laser-sensitive co-cured layer **320** can be made. Optionally, these layers can be removed and replaced prior to application of a new outer coating.

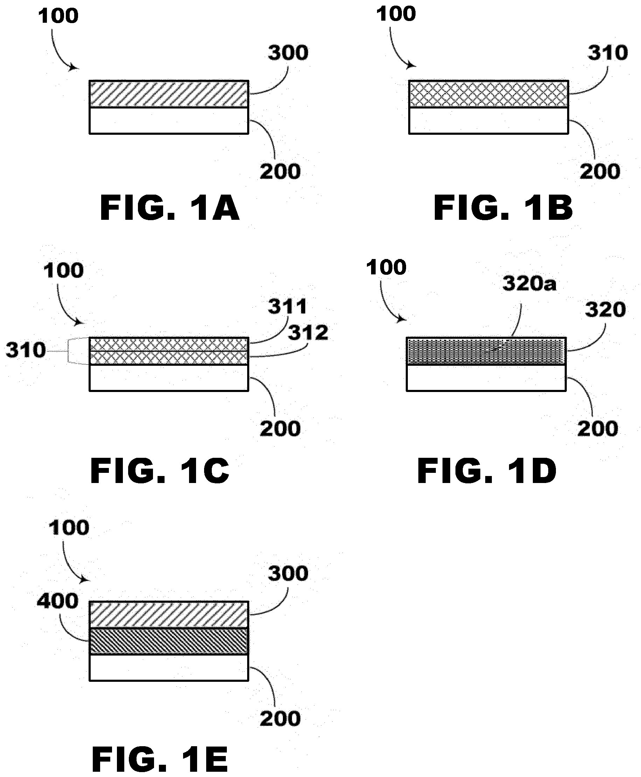

**Figs. 1A-1E** illustrate examples of cross-sections of coated non-metallic composite parts **100.** **Fig. 1A** illustrates a coated non-metallic composite part **100** comprising a protective coating layer **300** applied to a non-metallic composite part **200.** **Fig. 1B** illustrates a coated non-metallic composite part **100,** wherein the protective coating layer **300** is a multilayer **310** applied to a surface of the non-metallic composite part. **Fig. 1C** illustrates a coated non-metallic composite part **100,** wherein the multilayer **310** comprises at least a co-cured layer **312** applied to a surface of the non-metallic composite part **200** and at least a laser-sensitive layer **311,** applied to a surface of the co-cured layer **312.** Laser-sensitive layer **311** can be either a reflective layer, an optical sensor layer or a layer having both reflective and optical sensor properties. **Fig. 1D** illustrates a coated non-metallic composite part **100,** wherein the protective coating layer **300** is a co-curable coating which comprises a laser-sensitive material **320a,** incorporated therein to form a laser-sensitive co-cured layer **320** applied to a surface of the non-metallic composite part **200.** **Fig. 1E** illustrates a coated non-metallic composite part **100,** wherein a surfacing film **400** is applied to a surface of the non-metallic composite part **200** and the protective coating layer **300** is applied to the surfacing film **400.**

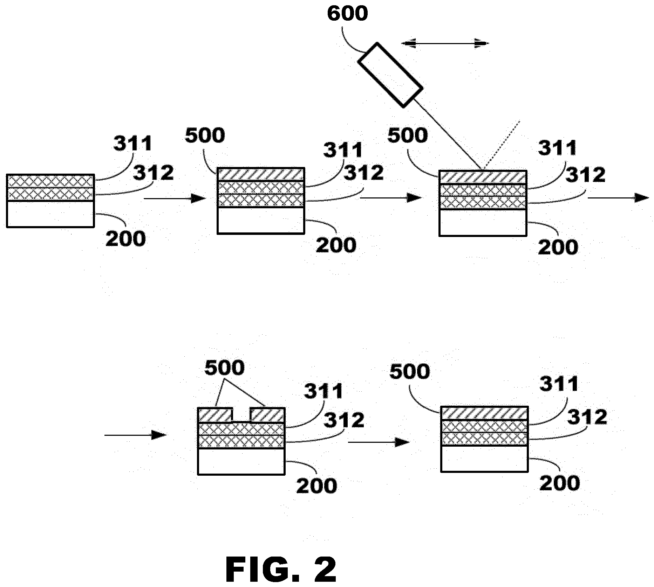

**Fig. 2** illustrates an example of application of an outer coating **500** as the outer layer of a coated non-metallic composite part **100** having a protective coating layer **300** comprising a multilayer **310** having at least a co-cured layer **312** applied to a surface of the non-metallic composite part **200** and at least a laser-sensitive layer **311** applied to a surface of the co-cured layer **312,** wherein the laser-sensitive layer **311** is selected from a reflective layer, an optical sensor layer or a layer having both reflective and optical sensor properties. The outer coating **500** is then ablated using a laser beam. Once the outer coating **500** is removed, a new outer coating is applied.

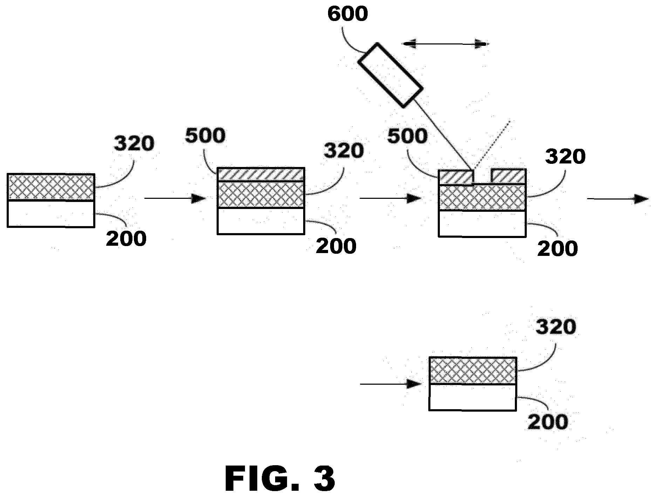

**Fig.** 3 illustrates an example of application of an outer coating **500** as the outer layer of a coated non-metallic composite part **100** having a protective coating layer **300** comprising a co-curable coating which comprises a laser-sensitive material **320a** incorporated therein applied to a surface of the non-metallic composite part **200.** The outer coating **500** is then ablated using a laser beam.

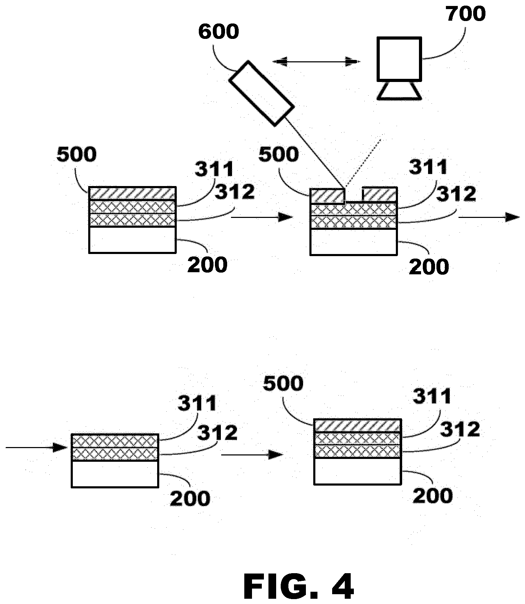

**Fig. 4** illustrates an example of laser ablation of an outer coating **500** using a feedback loop to monitor the ablation. The coated non-metallic composite part **100** comprises a protective coating layer **300** comprising a multilayer **310** having at least a co-cured layer **312** applied to a surface of the non-metallic composite part **200** and at least a laser-sensitive layer **311,** applied to a surface of the co-cured layer **312.** In the figure, a camera **700** is used to monitor the ablation but other sensors that detect the laser-sensitive layer **311.** The laser-sensitive layer **311** can be one of a reflective layer, an optical sensor layer or a layer having both reflective and optical sensor properties. Once the outer coating **500** is removed, a new outer coating can be applied.

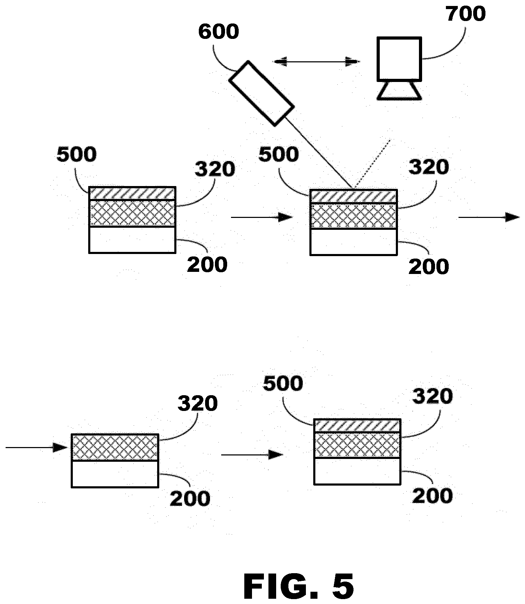

**Fig. 5** illustrates an example of laser ablation of an outer coating **500** using a feedback loop to monitor the ablation. The coated non-metallic composite part **100** comprises a protective coating layer **300** comprising a co-curable coating which comprises a laser-sensitive material **320a** incorporated therein applied to a surface of the non-metallic composite part **200.** In the figure, a camera **700** is used to monitor the ablation but other sensors that detect the laser-sensitive material **320a** can be utilized. Once the outer coating **500** is removed, a new outer coating can be applied.

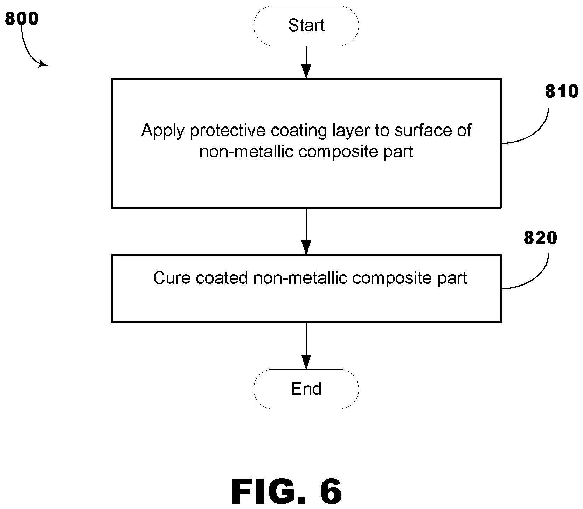

**Fig. 6** is a schematic representation of an example of a method **800** for protecting a surface of a non-metallic composite part **200** during laser ablative removal of an outer coating **500.** The method **800** can begin as illustrated in process block **810** by applying a protective coating layer **300** to a surface of non-metallic composite part **200,** thereby forming a coated non-metallic composite part **100.** The protective coating layer **300** comprises either: (a) a multilayer **310** having at least a co-cured layer **312** applied to a surface of the non-metallic composite part **200** and at least a laser-sensitive layer **311** applied to a surface of the co-cured layer **312,** wherein the laser-sensitive layer **311** is selected from a reflective layer, an optical sensor layer or a layer having both reflective and optical sensor properties; or (b) a co-curable coating which comprises a laser-sensitive material **320a** incorporated therein to form a laser-sensitive co-cured layer **320** applied to a surface of the non-metallic composite part **200,** wherein the laser-sensitive material **320a** is selected from a reflective material, an optical sensor material or a combination thereof. The method then proceeds to process block **820** where the coated non-metallic composite part **100** is cured. After completion of curing of the coated non-metallic composite part **100,** the method **800** can then terminate or end.

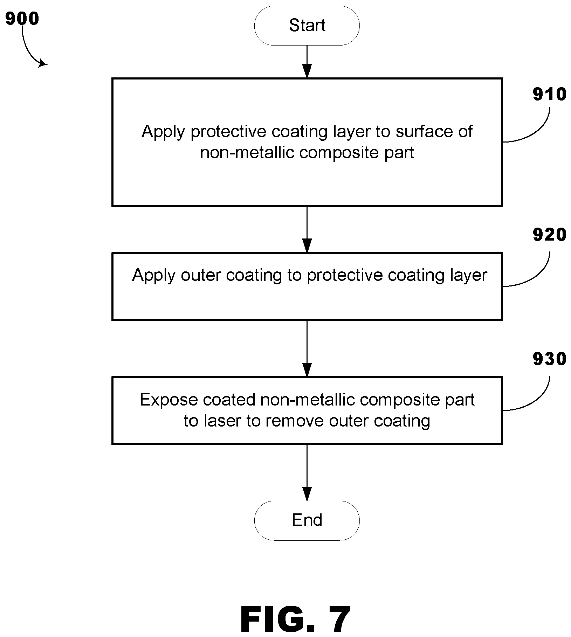

**Fig. 7** is a schematic representation of an example of a method **900** of removing an outer coating **500** from a coated non-metallic composite part **100.** The method **900** can begin as illustrated in process block **910** by applying a protective coating layer **300** to a surface of non-metallic composite part **200,** thereby forming a coated non-metallic composite part **100.** The protective coating layer **300** comprises either: (a) a multilayer **310** having at least a co-cured layer **312** applied to a surface of the non-metallic composite part **200** and at least a laser-sensitive layer **311** applied to a surface of the co-cured layer **312,** wherein the laser-sensitive layer **311** is selected from a reflective layer, an optical sensor layer or a layer having both reflective and optical sensor properties; or (b) a co-curable coating which comprises a laser-sensitive material **320a** incorporated therein to form a laser-sensitive co-cured layer **320** applied to a surface of the non-metallic composite part **200,** wherein the laser-sensitive material **320a** is selected from a reflective material, an optical sensor material or a combination thereof. The method then proceeds to process block **920** where an outer coating **500** is applied to the protective coating layer **300.** The method then proceeds to process block **930** involving exposing the coated non-metallic composite part **100** to a laser **600** to remove the outer coating **500.** After removal of the outer coating **500,** the method **900** can then terminate or end.

An exemplary method for forming a coated non-metallic composite part **100** for use on an aircraft or other surface can be described wherein the protective coating layer **300** is one layer comprising a co-curable coating which comprises a laser-sensitive material **320a,** for example, a reflective material, incorporated therein to form a laser-sensitive co-cured layer **320,** which is reflective, applied to a surface of the non-metallic composite part **200,** applying an outer coating **500,** removing the outer coating by laser ablation, and subsequently applying a new outer coating. In one example, the method can begin with layup of the non-metallic composite part **200,** applying the protective coating layer **300** by applying a co-curable coating which comprises a reflective material incorporated therein to form a reflective co-cured layer, and curing the coated non-metallic composite part **100.**

The surface of the coated non-metallic composite part **100** is prepared by finishing and the outer coating **500** is applied to the prepared surface of the coated non-metallic composite part **100.**

The aircraft is put in-service and over time, the outer coating **500** wears due to in-service exposure. Laser ablation is employed where the surface of the coated non-metallic composite part **100** is exposed to a laser beam and the emission of light, and the outer coating **500** is removed. A new outer coating can then be applied.

Also disclosed is an exemplary method for forming a coated non-metallic composite part **100** for use on an aircraft or other surface wherein the protective coating layer **300** is a multilayer **310** having at least a co-cured layer **312** applied to a surface of a surfacing film **400,** which is applied to a surface of the non-metallic composite part **200,** and at least a laser-sensitive layer **311,** which is a reflective layer applied to a surface of the co-cured layer **312,** applying an outer coating **500,** removing the outer coating by laser ablation, and subsequently applying a new outer coating. The method can begin with layup of the non-metallic composite part **200,** applying a surfacing film **400,** applying the protective coating layer **300** which comprises applying the co-cured layer **312** and applying the laser-sensitive layer **311,** which is a reflective layer, and curing the coated non-metallic composite part **100.**

The surface of the coated non-metallic composite part **100** is prepared by finishing and the outer coating **500** is applied to the prepared surface of the coated non-metallic composite part **100.**

The aircraft is put in-service and over time, the outer coating **500** wears due to in-service exposure. Laser ablation is used where the surface of the coated non-metallic composite part **100** is exposed to a laser beam and the emission of light, and the outer coating **500** is removed. A new outer coating can then be applied.

Another exemplary method can be described for forming a coated non-metallic composite part **100** for use on an aircraft or other surface, wherein the protective coating layer **300** is one layer comprising a co-curable coating which comprises a laser-sensitive material **320a** incorporated therein to form a laser-sensitive co-cured layer **320** applied to a surface of the non-metallic composite part **200,** wherein the laser-sensitive material **320a** is an optical sensor material, applying an outer coating **500,** removing the outer coating by laser ablation, and subsequently applying a new outer coating. In one example, the method can begin with layup of the non-metallic composite part **200,** applying the protective coating layer **300** and curing the coated non-metallic composite part **100.**

The surface of the coated non-metallic composite part **100** is prepared by finishing and the outer coating **500** is applied to the prepared surface of the coated non-metallic composite part **100.**

The aircraft is put in-service and over time, the outer coating **500** wears due to in-service exposure. Laser ablation is used where the surface of the coated non-metallic composite part **100** is exposed to a laser beam and the emission of light and the outer coating **500** is removed. The method can proceed to monitoring to determine when the outer coating **500** is removed and monitoring the wavelength of emitted light. A new outer coating can then be applied.

Also disclosed is a method for forming a coated non-metallic composite part **100** for use on an aircraft or other surface, wherein the protective coating layer **300** is a multilayer **310** having at least a co-cured layer **312** applied to a surface of a surfacing film **400** which is applied to the non-metallic composite part **200** and a laser-sensitive layer **311,** which is an optical sensor layer is applied to a surface of the co-cured layer **312,** applying an outer coating **500,** removing the outer coating by laser ablation, and subsequently applying a new outer coating. In one example, the method can begin with layup of the non-metallic composite part **200,** applying a surfacing film **400** , applying the protective coating layer **300** which comprises applying the co-cured layer **312** and applying the laser-sensitive layer, which is an optical sensor layer , and curing the coated non-metallic composite part **100.**

The surface of the coated non-metallic composite part **100** is prepared by finishing and the outer coating **500** is applied to the prepared surface of the coated non-metallic composite part.

The aircraft is put in-service and over time, the outer coating **500** wears due to in-service exposure. Laser ablation is used where the surface of the coated non-metallic composite part **100** is exposed to a laser beam and the emission of light, and the outer coating **500** is removed. The method can proceed to monitoring to determine when the outer coating **500** is removed and monitoring the wavelength of emitted light. A new outer coating can then be applied.

Methods and coatings described herein can be used to remove an outer coating or an outer coating from the surface of an airplane or similar aircraft. In addition, the methods and coatings disclosed herein can be used for other vehicles, including, but not limited to cars, land vehicles, space vehicles, etc.

## Claims

1. A method for protecting a surface of a non-metallic composite part (200) during laser ablative removal of an outer coating (500), the method comprising:
applying a protective coating layer (300) to a surface of the non-metallic composite part (200) to form a coated non-metallic composite part (100), and
curing the coated non-metallic composite part (100),
wherein the protective coating layer (300) comprises a multilayer (310) having at least a co-cured layer (312) applied to a surface of the non-metallic composite part (200) and at least a laser-sensitive layer (311) applied to a surface of the co-cured layer (312), wherein the laser-sensitive layer (311) is selected from a reflective layer, an optical sensor layer or a layer having both reflective and optical sensor properties.

2. The method of claim 1, wherein applying the protective coating layer (300) comprises applying the at least a co-cured layer (312) to the surface of the non-metallic composite part (200) and applying a laser-sensitive layer (311) to the surface of the co-cured layer (312).

3. The method of claim 1 or 2, further comprising removing at least a portion of the outer coating (500) applied to the protective coating layer (300) of the coated non-metallic composite part (100) using a laser (600).

4. The method of any of claims 1-3, wherein the non-metallic composite part (100) comprises carbon-reinforced polymers, glass fiber-reinforced polymers, or mixtures thereof; and the co-cured layer (312) comprises polyurea, fluorourethane, polyester, acrylic, polycarbonate, polysilazane, sol-gel coating, or epoxy.

5. The method of any of claims 1-4, further comprising, prior to applying the protective coating layer (300), applying a surfacing film (400) to the surface of the non-metallic composite part (200).

6. The method of any of claims 1-5, wherein the protective coating layer (300) comprises a multilayer (310) and the laser-sensitive layer (311) applied to a surface of the co-cured layer (312) is a reflective layer, an optical sensor layer, or both a reflective layer and an optical sensor layer.

7. The method of any of claims 1-6, wherein the protective coating layer (300) comprises a multilayer and the laser-sensitive layer (311) applied to a surface of the co-cured layer is a layer having both reflective and optical sensor properties.

8. A coated non-metallic composite part (100), comprising:
a protective coating layer (300) applied to a non-metallic composite part (200) ; and
an outer coating (500) applied to the protective coating layer (300),
wherein the protective coating layer (300) comprises a multilayer (310) having at least a co-cured layer (312) applied to a surface of the non-metallic composite part (200) and at least a laser-sensitive layer (311) applied to a surface of the co-cured layer (312), wherein the laser-sensitive layer (311) is selected from a reflective layer, an optical sensor layer or a layer having both reflective and optical sensor properties.

9. The coated non-metallic composite part (100) of claim 8, wherein the protective coating layer (300) comprises at least the co-cured layer (312) applied to the surface of the non-metallic composite part (200), and at least a laser-sensitive layer (311) applied to a surface of the co-cured layer (312), wherein the laser-sensitive layer (311) is selected from a reflective layer, an optical sensor layer or a layer having both reflective and optical sensor properties.

10. The coated non-metallic composite part (100) of claim 8 or 9, wherein the protective coating layer (300) comprises a multilayer (310) and the laser-sensitive layer (311) applied to a surface of the co-cured layer (312) is a reflective layer, is an optical sensor layer, or both a reflective layer and an optical sensory layer.

11. The coated non-metallic composite part (100) of any of claims 8-10, wherein a surfacing film or layer is positioned between the non-metallic composite part (200) and either (i) the co-cured layer or (ii) the reflective co-cured layer optical sensor co-cured layer or co-cured layer having both reflective and optical sensor properties.

12. The coated non-metallic composite part (100) of any of claims 8-11, wherein the outer coating is applied to either (i) at least laser-sensitive layer (311); or (ii) the reflective co-cured layer, optical sensor co-cured layer, or co-cured layer having both reflective and optical sensor properties.

13. The coated non-metallic composite part (100) of any of claims 8-12 wherein the protective coating layer (300) comprises a reflective material and/or an optical sensor material,
optionally wherein the protective coating layer (300) comprises a single material that possesses both reflective and optical sensor properties or at least two different materials, wherein at least one is a reflective material, and at least one other is an optical sensor material.

14. The coated non-metallic composite part (100) of claim 13 wherein the reflective material comprises metal or ceramic flakes.

15. The coated non-metallic composite part (100) of any of claims 8-14, wherein the protective coating layer (300) comprises a multilayer and the laser-sensitive layer (311) applied to a surface of the co-cured layer is a layer having both reflective and optical sensor properties.

## Patentansprüche

1. Verfahren zum Schützen einer Oberfläche eines nichtmetallischen Verbundstoffteils (200) während Laserablationsentfernung einer äußeren Beschichtung (500), wobei das Verfahren umfasst:
Aufbringen einer Schutzbeschichtung (300) auf eine Oberfläche des nichtmetallischen Verbundstoffteils (200), um einen beschichteten nichtmetallischen Verbundstoffteil (100) zu bilden, und
Härten des beschichteten nichtmetallischen Verbundstoffteils (100),
wobei die Schutzbeschichtung (300) eine Mehrfachschicht (310) umfasst, die wenigstens eine co-gehärtete Schicht (312), die auf eine Oberfläche des nichtmetallischen Verbundstoffteils (200) aufgebracht ist, und wenigstens eine laserempfindliche Schicht (311), die auf eine Oberfläche der co-gehärteten Schicht (312) aufgebracht ist, aufweist, wobei die laserempfindliche Schicht (311) ausgewählt ist aus einer reflektionsfähigen Schicht, einer optischen Sensorschicht und einer Schicht mit sowohl reflektionsfähigen als auch optischen Sensoreigenschaften.

2. Verfahren gemäß Anspruch 1, wobei Aufbringen der Schutzbeschichtung (300) Aufbringen der wenigstens einen co-gehärteten Schicht (312) auf die Oberfläche des nichtmetallischen Verbundstoffteils (200) und Aufbringen einer laserempfindlichen Schicht (311) auf die Oberfläche der co-gehärteten Schicht (312) umfasst.

3. Verfahren gemäß Anspruch 1 oder 2, ferner umfassend Entfernen wenigstens eines Teils der äußeren Beschichtung (500), die auf die Schutzbeschichtung (300) des beschichteten nichtmetallischen Verbundstoffteils (100) aufgebracht ist, unter Verwendung eines Lasers (600).

4. Verfahren gemäß einem der Ansprüche 1-3, wobei der nichtmetallische Verbundstoffteil (100) kohlenstoffverstärkte Polymere, glasfaserverstärkte Polymere oder Gemische davon umfasst; und die co-gehärtete Schicht (312) Polyharnstoff, Fluorurethan, Polyester, Acryl, Polycarbonat, Polysilazan, Sol-Gel-Beschichtung oder Epoxy umfasst.

5. Verfahren gemäß einem der Ansprüche 1-4, ferner umfassend, vor dem Aufbringen der Schutzbeschichtung (300), Aufbringen eines Oberflächenfilms (400) auf die Oberfläche des nichtmetallischen Verbundstoffteils (200) .

6. Verfahren gemäß einem der Ansprüche 1-5, wobei die Schutzbeschichtung (300) eine Mehrfachschicht (310) umfasst und die laserempfindliche Schicht (311), die auf eine Oberfläche der co-gehärteten Schicht (312) aufgebracht ist, eine reflektionsfähige Schicht, eine optische Sensorschicht oder eine Schicht mit sowohl reflektionsfähigen als auch optischen Sensoreigenschaften ist.

7. Verfahren gemäß einem der Ansprüche 1-6, wobei die Schutzbeschichtung (300) eine Mehrfachschicht umfasst und die laserempfindliche Schicht (311), die auf eine Oberfläche der co-gehärteten Schicht aufgebracht ist, eine Schicht mit sowohl reflektionsfähigen als auch optischen Sensoreigenschaften ist.

8. Beschichteter nichtmetallischer Verbundstoffteil (100), umfassend:
eine Schutzbeschichtung (300), die auf einen nichtmetallischen Verbundstoffteil (200) aufgebracht ist; und
eine äußere Beschichtung (500), die auf die Schutzbeschichtung (300) aufgebracht ist,
wobei die Schutzbeschichtung (300) eine Mehrfachschicht (310) umfasst, die wenigstens eine co-gehärtete Schicht (312), die auf eine Oberfläche des nichtmetallischen Verbundstoffteils (200) aufgebracht ist, und wenigstens eine laserempfindliche Schicht (311), die auf eine Oberfläche der co-gehärteten Schicht (312) aufgebracht ist, aufweist, wobei die laserempfindliche Schicht (311) ausgewählt ist aus einer reflektionsfähigen Schicht, einer optischen Sensorschicht und einer Schicht mit sowohl reflektionsfähigen als auch optischen Sensoreigenschaften.

9. Beschichteter nichtmetallischer Verbundstoffteil (100) gemäß Anspruch 8, wobei die Schutzbeschichtung (300) wenigstens die co-gehärtete Schicht (312), die auf eine Oberfläche des nichtmetallischen Verbundstoffteils (200) aufgebracht ist, und wenigstens eine laserempfindliche Schicht (311), die auf eine Oberfläche der co-gehärteten Schicht (312) aufgebracht ist, umfasst, wobei die laserempfindliche Schicht (311) ausgewählt ist aus einer reflektionsfähigen Schicht, einer optischen Sensorschicht und einer Schicht mit sowohl reflektionsfähigen als auch optischen Sensoreigenschaften.

10. Beschichteter nichtmetallischer Verbundstoffteil (100) gemäß Anspruch 8 oder 9, wobei die Schutzbeschichtung (300) eine Mehrfachschicht (310) umfasst und die laserempfindliche Schicht (311), die auf eine Oberfläche der co-gehärteten Schicht (312) aufgebracht ist, eine reflektionsfähige Schicht, eine optische Sensorschicht oder eine Schicht mit sowohl reflektionsfähigen als auch optischen Sensoreigenschaften ist.

11. Beschichteter nichtmetallischer Verbundstoffteil (100) gemäß einem der Ansprüche 8-10, wobei ein/eine Oberflächenfilm oder -schicht zwischen dem nichtmetallischen Verbundstoffteil (200) und entweder (i) der co-gehärteten Schicht oder (ii) der reflektionsfähigen co-gehärteten Schicht, optischer-Sensor-co-gehärteten Schicht oder co-gehärteten Schicht mit sowohl reflektionsfähigen als auch optischen Sensoreigenschaften angeordnet ist.

12. Beschichteter nichtmetallischer Verbundstoffteil (100) gemäß einem der Ansprüche 8-11, wobei die äußere Beschichtung auf entweder (i) wenigstens die laserempfindliche Schicht (311); oder (ii) die reflektionsfähige co-gehärtete Schicht, optischer-Sensor-co-gehärtete Schicht, oder co-gehärtete Schicht mit sowohl reflektionsfähigen als auch optischen Sensoreigenschaften aufgebracht ist.

13. Beschichteter nichtmetallischer Verbundstoffteil (100) gemäß einem der Ansprüche 8-12, wobei die Schutzbeschichtung (300) ein reflektionsfähiges Material und/oder ein optisches Sensormaterial umfasst,
wobei die Schutzbeschichtung (300) gegebenenfalls ein einziges Material, das sowohl reflektionsfähige als auch optische Sensoreigenschaften aufweist, oder wenigstens zwei verschiedene Materialien, wobei wenigstens eines ein reflektionsfähiges Material ist und wenigstens ein anderes ein optisches Sensormaterial ist, umfasst.

14. Beschichteter nichtmetallischer Verbundstoffteil (100) gemäß Anspruch 13, wobei das reflektionsfähige Material Metall- oder Keramikflocken umfasst.

15. Beschichteter nichtmetallischer Verbundstoffteil (100) gemäß einem der Ansprüche 8-14, wobei die Schutzbeschichtung (300) eine Mehrfachschicht umfasst und die laserempfindliche Schicht (311), die auf eine Oberfläche der co-gehärteten Schicht aufgebracht ist, eine Schicht mit sowohl reflektionsfähigen als auch optischen Sensoreigenschaften ist.

## Revendications

1. Procédé destiné à protéger une surface d'une pièce composite non métallique (200) pendant le retrait par ablation laser d'un revêtement externe (500), le procédé comprenant :
l'application d'une couche de revêtement protecteur (300) à une surface de la pièce composite non métallique (200) pour former une pièce composite non métallique revêtue (100), et
le durcissement de la pièce composite non métallique revêtue (100),
dans lequel la couche de revêtement protecteur (300) comprend une multicouche (310) ayant au moins une couche co-durcie (312) appliquée à une surface de la pièce composite non métallique (200) et au moins une couche sensible aux lasers (311) appliquée à une surface de la couche co-durcie (312), la couche sensible aux lasers (311) étant choisie parmi une couche réfléchissante, une couche de détection optique et une couche ayant des propriétés à la fois de réflexion et de détection optique.

2. Procédé selon la revendication 1, dans lequel l'application de la couche de revêtement protecteur (300) comprend l'application de l'au moins une couche co-durcie (312) à la surface de la pièce composite non métallique (200) et l'application d'une couche sensible aux lasers (311) à la surface de la couche co-durcie (312).

3. Procédé selon la revendication 1 ou 2, comprenant en outre le retrait d'au moins une partie du revêtement externe (500) appliqué à la couche de revêtement protecteur (300) de la pièce composite non métallique revêtue (100) au moyen d'un laser (600).

4. Procédé selon l'une quelconque des revendications 1 à 3, dans lequel la pièce composite non métallique (100) comprend des polymères renforcés de carbone, des polymères renforcés de fibres de verre ou des mélanges de ceux-ci, et la couche co-durcie (312) comprend de la polyurée, du fluorouréthane, du polyester, de la résine acrylique, du polycarbonate, du polysilazane, un revêtement sol-gel, ou de la résine époxy.

5. Procédé selon l'une quelconque des revendications 1 à 4, comprenant en outre, avant l'application de la couche de revêtement protecteur (300), l'application d'un film de surfaçage (400) à la surface de la pièce composite non métallique (200).

6. Procédé selon l'une quelconque des revendications 1 à 5, dans lequel la couche de revêtement protecteur (300) comprend une multicouche (310) et la couche sensible aux lasers (311) appliquée à une surface de la couche co-durcie (312) est une couche réfléchissante, une couche de détection optique, ou à la fois une couche réfléchissante et une couche de détection optique.

7. Procédé selon l'une quelconque des revendications 1 à 6, dans lequel la couche de revêtement protecteur (300) comprend une multicouche et la couche sensible aux lasers (311) appliquée à une surface de la couche co-durcie est une couche ayant des propriétés à la fois de réflexion et de détection optique.

8. Pièce composite non métallique revêtue (100), comprenant :
une couche de revêtement protecteur (300) appliquée à une pièce composite non métallique (200) ; et
un revêtement externe (500) appliqué à la couche de revêtement protecteur (300),
dans laquelle la couche de revêtement protecteur (300) comprend une multicouche (310) ayant au moins une couche co-durcie (312) appliquée à une surface de la pièce composite non métallique (200) et au moins une couche sensible aux lasers (311) appliquée à une surface de la couche co-durcie (312), la couche sensible aux lasers (311) étant choisie parmi une couche réfléchissante, une couche de détection optique et une couche ayant des propriétés à la fois de réflexion et de détection optique.

9. Pièce composite non métallique revêtue (100) selon la revendication 8, dans laquelle la couche de revêtement protecteur (300) comprend au moins la couche co-durcie (312) appliquée à la surface de la pièce composite non métallique (200), et au moins une couche sensible aux lasers (311) appliquée à une surface de la couche co-durcie (312), la couche sensible aux lasers (311) étant choisie parmi une couche réfléchissante, une couche de détection optique et une couche ayant des propriétés à la fois de réflexion et de détection optique.

10. Pièce composite non métallique revêtue (100) selon la revendication 8 ou 9, dans laquelle la couche de revêtement protecteur (300) comprend une multicouche (310) et la couche sensible aux lasers (311) appliquée à une surface de la couche co-durcie (312) est une couche réfléchissante, est une couche de détection optique, ou à la fois une couche réfléchissante et une couche de détection optique.

11. Pièce composite non métallique revêtue (100) selon l'une quelconque des revendications 8 à 10, dans laquelle un film ou une couche de surfaçage est positionné entre la pièce composite non métallique (200), et soit (i) la couche co-durcie, soit (ii) la couche co-durcie réfléchissante, la couche co-durcie de détection optique, ou la couche co-durcie ayant des propriétés à la fois de réflexion et de détection optique.

12. Pièce composite non métallique revêtue (100) selon l'une quelconque des revendications 8 à 11, dans laquelle le revêtement externe est appliqué à (i) au moins une couche sensible aux lasers (311), ou (ii) la couche co-durcie, ou (ii) la couche co-durcie réfléchissante, la couche co-durcie de détection optique, ou la couche co-durcie ayant des propriétés à la fois de réflexion et de détection optique.

13. Pièce composite non métallique revêtue (100) selon l'une quelconque des revendications 8 à 12 dans laquelle la couche de revêtement protecteur (300) comprend un matériau réfléchissant et/ou un matériau de détection optique,
éventuellement dans laquelle la couche de revêtement protecteur (300) comprend un seul matériau qui possède des propriétés à la fois de réflexion et de détection optique, ou au moins deux matériaux différents, au moins un étant un matériau réfléchissant, et au moins un autre étant un matériau de détection optique.

14. Pièce composite non métallique revêtue (100) selon la revendication 13 dans laquelle le matériau réfléchissant comprend des paillettes métalliques ou céramiques.

15. Pièce composite non métallique revêtue (100) selon l'une quelconque des revendications 8 à 14, dans laquelle la couche de revêtement protecteur (300) comprend une multicouche et la couche sensible aux lasers (311) appliquée à une surface de la couche co-durcie est une couche ayant des propriétés à la fois de réflexion et de détection optique.
